# EUROPÄISCHE PATENTSCHRIFT

(11) **EP 0 461 440 B1**
(45) Veröffentlichungstag und Bekanntmachung des Hinweises auf die Patenterteilung: **24.04.1996**
(21) Anmeldenummer: 91108350.9
(22) Anmeldetag: 23.05.1991
(51) Int. Cl.: H02B 11/04, H02B 11/127

(54) **Trennkontaktanordnung für ein- und ausfahrbare Leistungsschalter in Schaltanlagen**
Disconnecting arrangement for an extensible and retractable power circuit breaker in switchgear apparatus
Dispositif de sectionnement pour un disjoncteur de puissance extensible et rétractable dans une installation de commutation

(30) Priorität: 24.05.1990 DE 4016706
(43) Veröffentlichungstag der Anmeldung: 18.12.1991
(73) Patentinhaber: Klöckner-Moeller GmbH, D-53115 Bonn (DE)
(72) Erfinder: Buchbender, Guido, Dipl.-Ing., W-5300 Bonn 1 (DE); Mader, Hans-Jürgen, Dipl.-Ing., W-5400 Koblenz (DE); Nitsche, Norbert, Dipl.-Ing., W-5205 St. Augustin 3 (DE); Schlaweck, Karlheinz, Dipl.-Ing., W-5300 Bonn 3 (DE); Zimmermann, Burkhard, Dipl.-Ing., W-4630 Bochum 1 (DE); Richardt, Peter, Dipl.-Ing., W-5047 Wesseling (DE); Wittkop, Jochen, Dipl.-Ing., W-5205 St. Augustin 1 (DE); Schmitz, Klaus, Dipl.-Ing., W-5060 Berg.-Gladbach 1 (DE)

(56) Entgegenhaltungen:
- DE-A- 2 265 022
- US-A- 2 629 796

## Beschreibung

Die Erfindung betrifft eine Trennkontaktanordnung für ein- und ausfahrbare Leistungsschalter in Schaltanlagen nach dem Oberbegriff des Anspruches 1.

Bei einer aus der DE-OS 36 21 748 bekannten Trennkontaktanordnung für einschiebbare Leistungsschalter in Schaltanlagen sind im festen Anlagenteil und am Leistungsschalter Anschlußfahnen vorhanden, wobei zur Herstellung der elektrisch leitenden Verbindung der festen Anschlußfahnen mit den am Leistungsschalter angeordneten Anschlußfahnen ein Kontaktrahmen mit Kontaktbrücken dient, der über einen Antrieb mittels einer Drehspindelanordnung oder dergleichen in vorbestimmte Kontaktstellungen zwischen AUS und EIN gebracht wird.

Bei dieser bekannten Trennkontaktanordnung entsteht durch das Verschieben der Kontaktbrücken auf den Anschlußfahnen metallischer Abrieb, wodurch die Funktionsfähigkeit der Trennkontaktanordnung im Laufe der Zeit beeinträchtigt wird.

Der Erfindung liegt die Aufgabe zugrunde, diese Schwierigkeiten zu vermeiden und eine Trennkontaktanordnung für ein- und ausfahrbare Leistungsschalter in Schaltanlagen nach dem Oberbegriff des Anspruches 1 so auszubilden, daß die Kontaktgabe und die Kontakttrennung beim Ein- und Ausfahren des Leistungsschalters ohne metallischen Abrieb an den zusammenarbeitenden Kontaktteilen gewährleistet ist.

Diese Aufgabe wird gemäß der Erfindung bei einer gattungsgemäßen Trennkontaktanordnung durch den Kennzeichnungsteil des Anspruches 1 gelöst, während in den Ansprüchen 2 bis 21 besonders vorteilhafte Weiterbildungen der Erfindung gekennzeichnet sind.

Durch die Erfindung ergibt sich der Vorteil, daß die Kontaktbrücken weder für die Herstellung noch für die Unterbrechung des Kontaktes zwischen den Kontaktelementen am Leistungsschalter und an den Stromschienen im festen Anlagenteil verschoben werden müssen. Die Kontaktbrücken verbleiben vielmehr stets in ihrer ortsfesten Stellung an den Kontaktelementen vorzugsweise im festen Anlagenteil und werden durch die erfindungsgemäß vorgesehenen Trennelemente aus isolierendem Kunststoff entgegen Federdruck so weit auseinandergedrückt, daß die Kontaktelemente des Leistungsschalters beim Einschub ohne jede Berührung mit den Kontaktenden der Kontaktbrücken in ihre Einschubstellung gelangen, in der sie erst nach einer entsprechenden axialen Verlagerung der Trennelemente für einen elektrischen Kontakt mit den Kontaktbrücken freigegeben werden, wobei die vorher auseinandergehaltenen Enden der zweckmäßig als Tulpenkontakte ausgebildeten Kontaktbrücken sich von außen radial an den Umfang der Kontaktelemente anlegen, ohne daß zwischen diesen und den Kontaktbrücken ein metallischer Abrieb entsteht.

Die Trennelemente sind vorteilhafterweise Teile einer am festen Anlagenteil verschiebbar angeordneten Trennplatte, die den Raum zwischen Stromschienen und Leistungsschalter vollständig abdeckt. Außerdem sind die Trennelemente an dem den Kontaktbrücken oder Tulpenkontakten zugewandten Ende zweckmäßig derart abgeschrägt, daß sie beim Verschieben in Richtung der Kontaktbrücken oder Tulpenkontakte deren Kontaktstücke ohne nennenswerten mechanischen Widerstand auseinanderdrücken und sich damit ohne metallischen Abrieb zwischen diese und die Kontaktelemente des Leistungsschalters schieben. Dabei können die offenen Enden der Trennelemente für den Einschub der Kontaktelemente gegen den Leistungsschalter über die Ebene der Trennplatte vorteilhafterweise so weit hervorstehen, daß sie auch als Anschläge für die Trennplatte in der EIN-Stellung des Leistungsschalters dienen.

Die Trennelemente haben zweckmäßig Hülsenform, und eine besonders gleichmäßige und sichere Verstellung der Trennelemente)mit der Trennplatte wird dadurch erreicht, daß für die Verstellung der Trennplatte mit den daran angeordneten hülsenförmigen Trennelementen eine Schraubgetriebeanordnung vorgesehen ist, die aus mehreren vom festen Anlagenteil parallel zueinander hervorstehenden Gewindebolzen und auf deren Gewindegängen jeweils gleichsinnig drehbaren, synchron angetriebenen Zahnrädern besteht, die an der Trennplatte drehbar gelagert und mit dieser zwischen dem festen Anlagenteil und dem Leistungsschalter in axialer Richtung verstellbar sind. Die Zahnräder können dabei über einen zentralen Zahnkranz oder einen Zahnriementrieb mit einer gemeinsamen Antriebseinrichtung zur axialen Verstellung der Trennplatte verbunden sein. Außerdem können zur Sicherung des Leistungsschalters beim Einschub in den festen Anlagenteil zwischen dem Leistungsschalter und dem festen Anlagenteil mechanische Verriegelungselemente vorhanden sein, die den Leistungsschalter schon in der Einschubstellung am festen Anlagenteil sichern und beim Abbau des Leistungsschalters nach Verlagerung der Trennplatte in die Trennstellung der Kontaktbrücken aus seiner Verriegelungsstellung wieder freigeben.

Ferner kann die Trennplatte in jeder ihrer Stellungen, nämlich in der AUS-Stellung, in der TEST-Stellung und in der EIN-Stellung des Leistungsschalters, durch einen Sperrhebel verriegelbar sein, der in jeder dieser Stellungen in eine Innenverzahnung an dem zentralen Zahnkranz für den synchronen Antrieb der Zahnräder zur Verstellung der Trennplatte sperrend eingreift, wobei dieser Sperrhebel zusätzlich noch eine stirnseitige Entriegelungsnase für einen Entklinkungsstift an der Rückseite des Leistungsschalters aufweisen kann, mit der er den Entklinkungsstift in den verschiedenen Raststellungen der Trennplatte betätigt.

Bevorzugte Ausführungsbeispiele der Erfindung sind in der Zeichnung schematisch dargestellt. Es zeigen
- Fig. 1: einen senkrechten Längsschnitt durch eine Trennkontaktanordnung zwischen einem festen Anlagenteil und einem Leistungsschalter in der AUS-Stellung,
- Fig. 2: eine gegenüber Fig. 1 vergrößerte Teildarstellung der Trennkontaktanordnung bei eingeschobenem Leistungsschalter und zugehöriger Verriegelungsvorrichtung in der AUS-Stellung,
- Fig. 3: die vergrößerte Teildarstellung des unteren Teils der Trennkontaktanordnung von Fig. 1 in der EIN-Stellung des Leistungsschalters,
- Fig. 4: eine teilweise geschnittene Draufsicht auf eine Getriebeanordnung zum Verstellen der Trennplatte der Trennkontaktanordnung in Richtung des Pfeiles IV von Fig. 1,
- Fig. 5: eine gegenüber Fig. 4 abgewandelte Ausführungsform einer Antriebsvorrichtung für die Trennplatte ebenfalls in Richtung des Pfeiles IV von Fig. 1, und
- Fig. 6: ein weiteres abgewandeltes Ausführungsbeispiel einer solchen Trennkontaktanordnung mit schwenkbaren Trennhebeln für die Verstellung der Trennplatte zwischen festem Anlagenteil und Leistungsschalter mittels einer Drehspindelanordnung.

Bei den gezeigten Trennkontaktanordnungen 1 sind am Leistungsschalter 2 und an Stromschienen 13 im festen Anlagenteil 3 Kontaktelemente 4, 5 vorhanden, die durch Kontaktbrücken 6 leitend miteinander verbunden oder voneinander getrennt werden können, deren Kontaktstücke 7 an den Kontaktelementen 4, 5 sowohl des festen Anlagenteils 3 als auch des Leistungsschalters 2 unter Federkraft form- und kraftschlüssig angreifen.

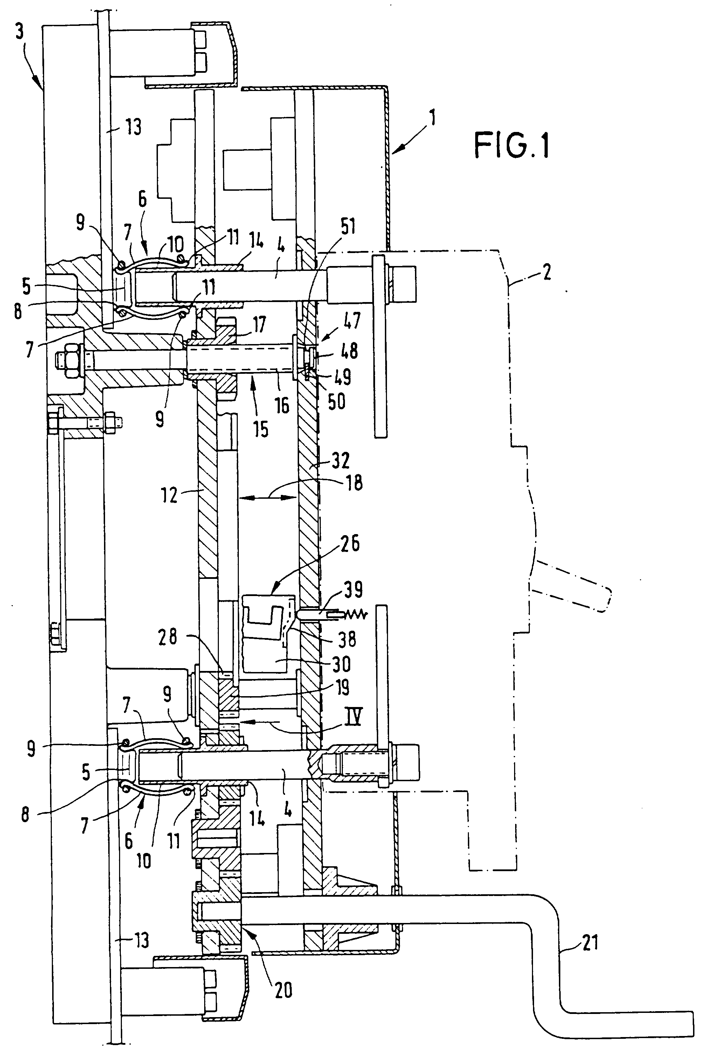

Wie in Fig. 1 bis 3 und Fig. 6 im einzelnen zu erkennen ist, sind die Kontaktbrücken 6 bei den gezeigten Ausführungsbeispielen zweckmäßig als Tulpenkontakte mit mehreren an den Kontaktelementen 5 des festen Anlagenteils 3 in einer Ringnut 8 oder einer ähnlich geformten Vertiefung unter der Spannung von Ringfedern 9 fest anliegenden Kontaktstücken 7 oder Kontaktsegmenten ausgebildet. Statt solcher Tulpenkontakte können auch anders ausgebildete Kontaktbrücken 6 verwendet werden, die mit entsprechenden Vorsprüngen oder Ausformungen in dafür vorgesehenen Vertiefungen an den betreffenden Kontaktelementen 4, 5 unter Federkraft formschlüssig gesichert sind.

Wie in Fig. 1 weiterhin zu erkennen ist, liegen die Kontaktstücke 7 oder Kontaktbrücken 6 in der gezeigten Trennstellung der Trennkontaktanordnung 1 mit ihrem dem Leistungsschalter 2 zugewandten Ende an Trennelementen 10 aus isolierendem Kunststoff an, in die die gegenüberliegenden Kontaktelemente 4 in der Einschubstellung des Leistungsschalters 2 so weit einfahrbar sind, daß sie sich im Bereich der durch die Trennelemente 10 auseinandergehaltenen Kontaktenden 11 der Kontaktbrücken 6 befinden.

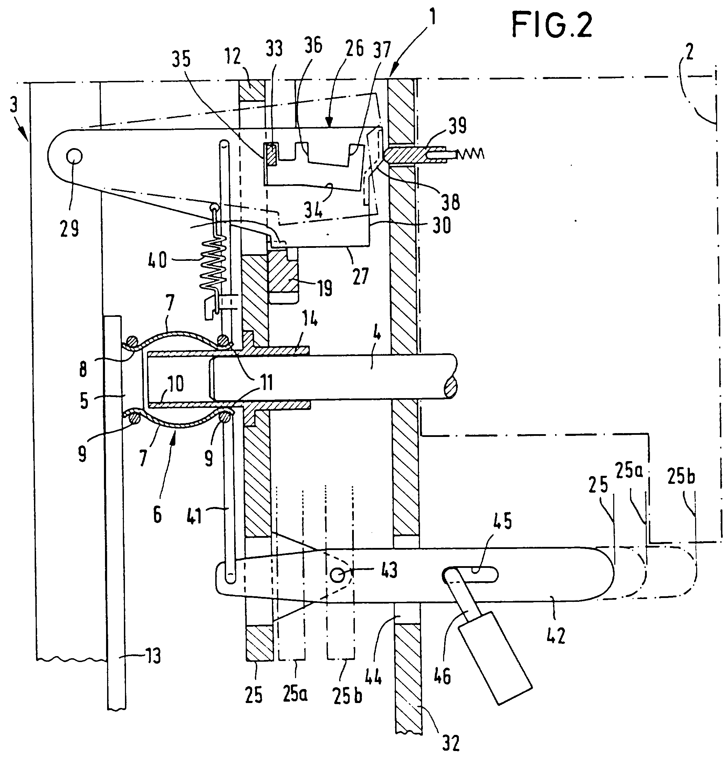

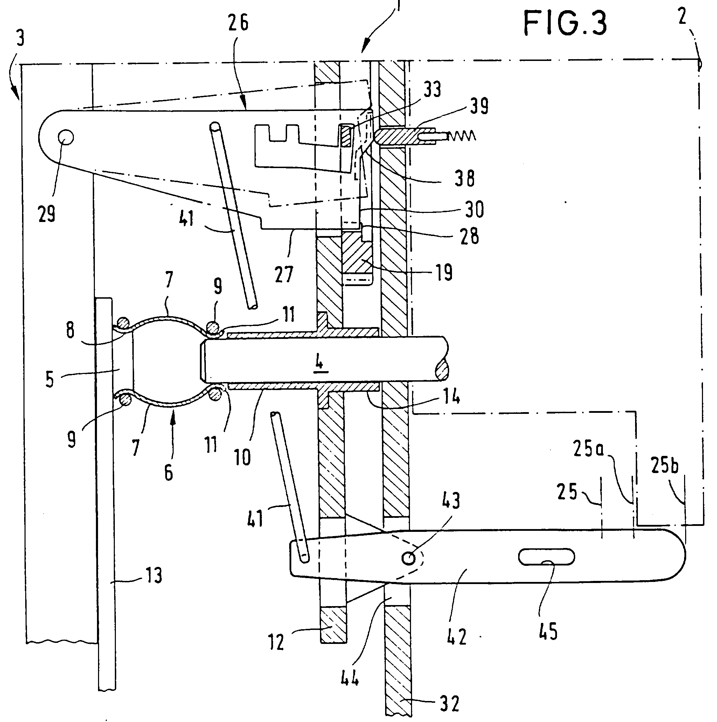

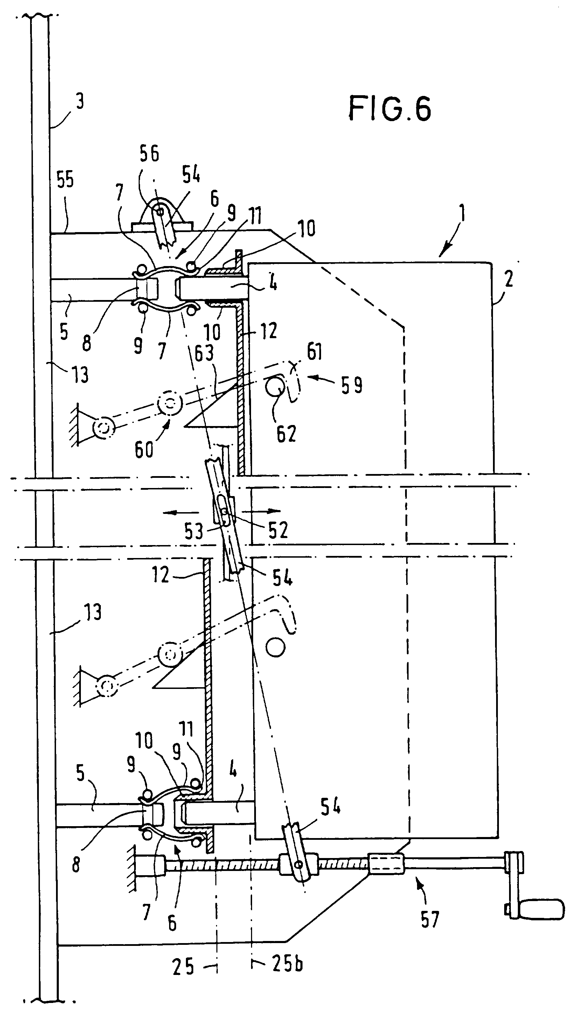

Nach dem Einschub des Leistungsschalters 2 sind die Trennelemente 10 auf den Kontaktelementen 4 von der in Fig. 1 und 2 ebenso wie im unteren Teil von Fig. 6 gezeigten Trennstellung in die in Fig. 3 und im oberen Teil von Fig. 6 gezeigte EIN-Stellung des Leistungsschalters 2 verschiebbar, wobei sie die vorher auseinandergehaltenen Kontaktenden 11 der Kontaktstücke 7 der Kontaktbrücken 6 freigeben, so daß diese auch an den eingeschobenen Kontaktelementen 4 des Leistungsschalters 2 in einen form- und kraftschlüssigen Kontakteingriff gelangen.

Die Trennelemente 10 sind Teile einer zwischen dem festen Anlagenteil 3 und dem eingeschobenen Leistungsschalter 2 verschiebbaren Trennplatte 12, die den Raum zwischen den Stromschienen 13 am festen Anlagenteil 3 und dem Leistungsschalter 2 vollständig abdeckt. Die Trennplatte 12 ist am festen Anlagenteil 3 verschiebbar gelagert, und die Kontaktelemente 4 des Leistungsschalters 2 sind beim Aufsetzen des Leistungsschalters 2 in die ihnen zugewandten offenen Enden 14 der Trennelemente 10 einführbar. Diese offenen Enden 14 der Trennelemente 10 stehen bei dem Ausführungsbeispiel von Fig. 1 bis 5 über die Ebene der Trennplatte 12 so weit vor, daß sie als Anschläge für die Trennplatte 12 an dem Leistungsschalter 2 in der in Fig. 3 gezeigten EIN-Stellung dienen.

Die Trennelemente 10 haben zweckmäßig Hülsenform, und für die Verstellung der Trennplatte 12 mit den daran angeordneten hülsenförmigen Trennelementen 10 ist bei der ersten Ausführungsform von Fig. 1 bis 5 eine Schraubgetriebeanordnung 15 (Fig. 1) vorgesehen.

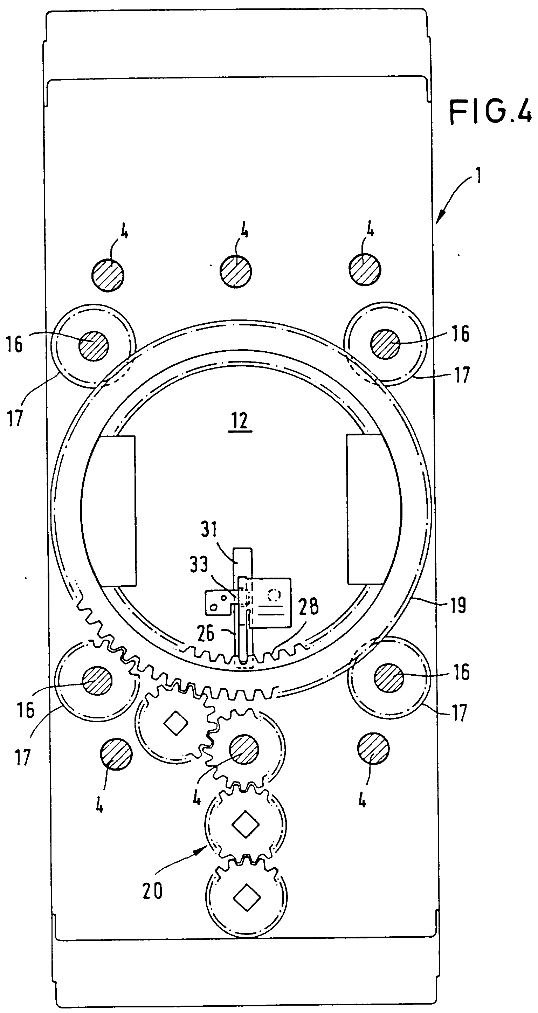

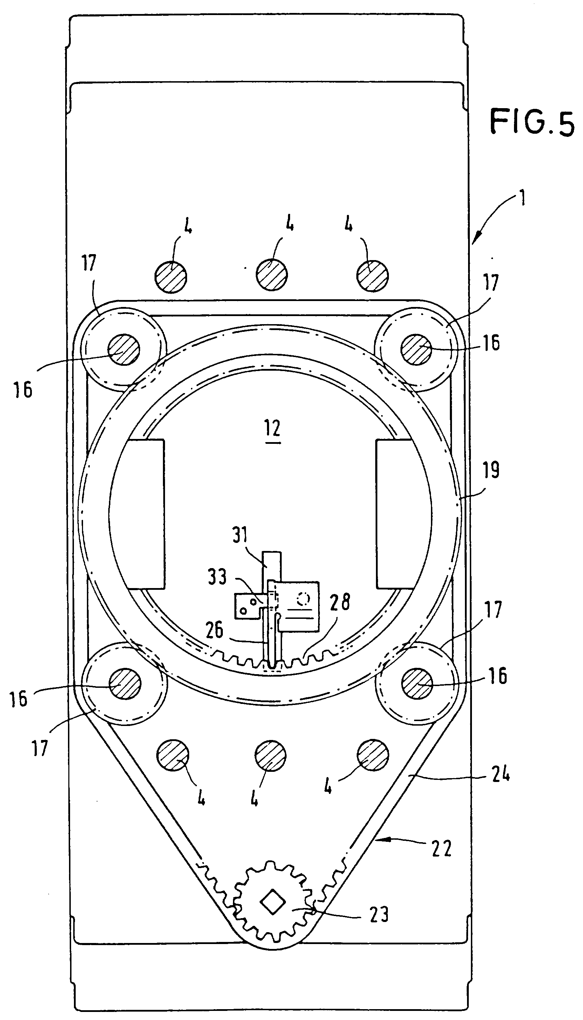

Diese Schraubgetriebeanordnung 15 besteht, wie in den beiden Draufsichten von Fig. 4 und 5 in Verbindung mit der Darstellung von Fig. 1 zu erkennen ist, aus mehreren vom festen Anlagenteil 3 parallel zueinander hervorstehenden Gewindebolzen 16, auf deren Gewindegängen nach Art von Planetenrädern jeweils gleichsinnig drehbare, synchron angetriebene Zahnräder 17 angeordnet sind, die an der Trennplatte 12 drehbar gelagert und mit dieser auf den Gewindebolzen 16 in axialer Richtung 18 verstellbar sind.

Bei einer ersten Ausführungsform von Fig. 1 und 4 ist für den synchronen Antrieb der Zahnräder 17 ein zentraler Zahnkranz 19 vorgesehen, der mit allen vier vorhandenen Zahnrädern 17 kämmt und über ein mehrstufiges Zahnradgetriebe 20 mittels einer Handkurbel 21 oder dergleichen (Fig. 1) in Drehung versetzt werden kann.

Statt eines solchen Zahnradgetriebes 20 können die vier Gewinde-Zahnräder 17, wie in Fig. 5 gezeigt ist, von der Handkurbel 21 her auch über einen Zahnriementrieb 22 mit einem Zahnriemen 24 gleichsinnig und synchron angetrieben werden. Der über ein Antriebsritzel 23 laufende Zahnriemen 24 ist hierbei um alle vier Zahnräder 17 außen herumgeführt.

Wenn auch bei dieser abgewandelten Ausführungsform für den synchronen Antrieb der vier Gewinde-Zahnräder 17 der gemäß Fig. 4 vorgesehene zentrale Zahnkranz 19 nicht unbedingt erforderlich wäre, so dient dieser Zahnkranz 19 jedoch bei beiden Ausführungsformen noch einem weiteren Zweck.

Wie sowohl in den Schnittdarstellungen von Fig. 1 bis 3 als auch in Fig. 4 und 5 im einzelnen zu erkennen ist, ist die Trennplatte 12 in jeder ihrer Stellungen, nämlich in der AUS-Stellung 25 von Fig. 1 und 2, in der in Fig. 2 strichpunktiert angedeuteten TEST-Stellung 25a und in der EIN-Stellung 25b des Leistungsschalters 2 von Fig. 3, durch einen Sperrhebel 26 verriegelbar, der in jeder dieser Stellungen mit einem Raststeg 27 in eine Innenverzahnung 28 an dem zentralen Zahnkranz 19 für den synchronen Antrieb der Zahnräder 17 sperrend eingreift.

Der Sperrhebel 26 ist am festen Anlagenteil 3 um eine zur Ebene der Trennplatte 12 parallele Achse 29 (Fig. 2 und 3) schwenkbar gelagert und steht mit seinem freien Ende durch eine schlitzförmige Öffnung 31 (Fig. 4 und 5) in der Trennplatte 12 gegen die Rückseite des Leistungsschalters 2 oder eine damit verbundene Tragplatte 32 in jeder der gezeigten Stellungen von Fig. 1 bis 3 hervor.

Die schlitzförmige Öffnung 31 an der Trennplatte 12 weist einen Quersteg 33 auf, und an dem Sperrhebel 26 ist eine fensterartige Längsöffnung 34 mit vorzugsweise drei davon parallel zur Ebene der Trennplatte 12 zur Seite gerichteten Rastschlitzen 35, 36, 37 vorgesehen, die in Längsrichtung des Sperrhebels 26 in einem solchen gegenseitigen Abstand nebeneinander angeordnet sind, daß der Sperrhebel 26 den Quersteg 33 an der Trennplatte 12 jeweils in den Stellungen AUS, TEST und EIN von Fig. 1 bis 3 mit einem der parallelen Rastschlitze 35, 36, 37 sperrend übergreift.

Der Sperrhebel 26 greift außerdem mit dem Raststeg 27 in jeder seiner Sperrstellungen in die Innenverzahnung 28 an dem zentralen Zahnkranz 19 sperrend ein, so daß die Lage der Trennplatte 12 in den Stellungen AUS, TEST und EIN jeweils genau festgelegt ist und ohne ein Lösen des Sperrhebels 26 nicht verändert werden kann.

Der Sperrhebel 26 hat ferner eine stirnseitige Entriegelungsnase 38 für einen Entklinkungsstift 39 an der Rückseite des Leistungsschalters 2, mit der er den Entklinkungsstift 39 jeweils in den Raststellungen der Trennplatte 12 betätigt.

Der Sperrhebel 26 steht unter der Wirkung einer Zugfeder 40 und ist über ein Gestänge 41 mit einem Betätigungshebel 42 verbunden, der an der Trennplatte 12 um eine Achse 43 schwenkbar gelagert ist und durch einen Schlitz 44 an der Tragplatte 32 neben dem Leistungsschalter 2 nach vorne hervorsteht.

Um eine unbefugte Betätigung der Trennkontaktanordnung 1 zu verhindern, weist der Betätigungshebel 42 ein Langloch 45 auf neben einem von der Tragplatte 32 in bekannter Weise hervorstehenden Einhängeauge für ein Sperrglied 46, wie ein Einhängeschloß oder dergleichen.

Um den Anbau und den Einschub des Leistungsschalters 2 an dem festen Anlagenteil 3 der Trennkontaktanordnung 1 zu erleichtern, sind zwischen dem Leistungsschalter 2 und dem festen Anlagenteil 3 mehrere mechanische Verriegelungselemente 47 (Fig. 1) vorhanden, die den Leistungsschalter 2 schon in der Einschubstellung am festen Anlagenteil 3 sichern und beim Abbau des Leistungsschalters 2 nach Verlagerung der Trennplatte 12 in die Trennstellung der Kontaktbrücken 6 von Fig. 1 aus seiner Verriegelungsstellung wieder freigeben.

Diese Verriegelungselemente 47 können, wie im oberen Teil von Fig. 1 im Bereich der Tragplatte 32 des Leistungsschalters 2 gezeigt ist, so ausgebildet sein, daß die vom festen Anlagenteil 3 der Trennkontaktanordnung 1 hervorstehenden Gewindebolzen 16 mit ihrem freien Ende 48 in Zentrieröffnungen 49 mit federnden Verrastungen 50 an der Rückseite des Leistungsschalters 2 oder an dessen Tragplatte 32 eingreifen. Die Gewindebolzen 16 können hierfür an ihrem freien Ende 48 eine seitliche Quernut 51 für den Eingriff einer federnden Rastzunge an jeder Zentrieröffnung 49 aufweisen, wobei die Quernut 51 auch als Umfangsnut ausgebildet sein kann, mit der die federnde Rastzunge an der Rückseite des Leistungsschalters 2 leicht in und außer Eingriff gebracht werden kann.

Wie anhand des in Fig. 6 gezeigten weiteren abgewandelten Ausführungsbeispiels einer solchen Trennkontaktanordnung 1 gezeigt ist, kann die verstellbare Trennplatte 12 auch mit seitlichen Zapfen 52 in Langlöchern 53 an vorzugsweise zwei parallelen seitlichen Trennhebeln 54 sitzen, die an der Oberseite des ortsfesten Gehäuses 55 der Trennkontaktanordnung 1 in Drehlagern 56 schwenkbar gelagert sind, wobei die Trennplatte 12 an den Trennhebeln 54 etwa mittig angelenkt ist.

Zur Verstellung der Trennplatte 12 mittels der Trennhebel 54 ist eine Stellspindelanordnung 57 vorgesehen, die an der den Drehlagern 56 gegenüberliegenden Gehäuseseite derart angeordnet und mittels einer Spindelmutter 58 oder dergleichen mit den Trennhebeln 54 so verbunden ist, daß die Trennplatte 12 mit ihren hülsenförmigen Trennelementen 10 durch Verschwenken der Trennhebel 54 jeweils zwischen der Trennstellung für die Kontaktbrücken 6 bzw. Tulpenkontakte im unteren Teil von Fig. 6 und zwischen der Kontaktstellung im oberen Teil von Fig. 6 gegenüber den Kontaktelementen 4 des Leistungsschalters 2 hin- und herverlagert werden kann.

Um ein ungewolltes Ausfahren des Leistungsschalters 2 aus dem festen Anlagenteil 3 zu vermeiden, bevor die Kontaktbrücken 6 oder Tulpenkontakte von den an der Rückseite des Leistungsschalters 2 vorstehenden Kontaktelementen 4 abgehoben sind, können zwischen dem Leistungsschalter 2 und dem festen Anlagenteil 3 mechanische Verriegelungselemente 59 für den Leistungsschalter 2 vorgesehen sein, die den Leistungsschalter 2 in der Einschubstellung am festen Anlagenteil 3 sichern und nach Verlagerung der Trennplatte 12 in die Trennstellung der Kontaktbrücken 6 oder Tulpenkontakte aus seiner Verriegelungsstellung wieder freigeben.

Diese Verriegelungselemente 59 können, wie in Fig. 6 gezeigt ist, nach Art von Verriegelungshaken 60, die am festen Anlagenteil 3 oder gegebenenfalls auch am Leistungsschalter 2 schwenkbar gelagert sind und in der Verriegelungsstellung mit ihrem hakenförmigen Ende 61 in entsprechende Hakenwiderlager 62 an der Rückseite des Leistungsschalters 2 oder am festen Anlagenteil 3 eingreifen, wobei an der Trennplatte 12 Auflaufflächen 63 oder -schrägen vorhanden sind für die Verriegelungshaken 60, die diese in der Trennstellung der Trennplatte 12, in der die Kontaktbrücken 6 bzw. deren Kontaktstücke 7 von den Kontaktelementen 4 des Leistungsschalters 2 abgehoben sind, aus ihrer Verriegelungsstellung am Leistungsschalter 2 oder am festen Anlagenteil 3 ausheben, wie dies im unteren Teil von Fig. 6 gezeigt ist.

Die hülsenförmigen Trennelemente 10 können wie in Fig. 6 gezeigt ist, an ihrem den Kontaktbrücken 6 zugewandten Ende angefast oder konisch abgeschrägt sein, um die Kontaktstücke 7 leichter auseinanderzudrücken.

## Patentansprüche

1. Trennkontaktanordnung für ein- und ausfahrbare Leistungsschalter in Schaltanlagen, wobei am Leistungsschalter und an Stromschienen im festen Anlagenteil Kontaktelemente und diese verbindende Kontaktbrücken vorhanden sind, die an den Kontaktelementen unter Federkraft form- und kraftschlüssig angreifen, **dadurch gekennzeichnet**, daß die Kontaktbrücken (6) an einem Ende an den Kontaktelementen (5, 4) des festen Anlagenteils (3) oder des Leistungsschalters (2) formschlüssig festgehalten sind und in der Trennstellung der Trennkontaktanordnung (1) mit ihrem anderen Kontaktende (11) an Trennelementen (10) aus isolierendem Kunststoff anliegen, in die die gegenüberliegenden Kontaktelemente (4) in der Einschubstellung des Leistungsschalters (2) so weit eingefahren sind, daß sie sich im Bereich der durch die Trennelemente (10) auseinandergehaltenen Kontaktenden (11) der Kontaktbrücken (6) befinden, und daß die Trennelemente (10) nach Einschub des Leistungsschalters (2) auf den Kontaktelementen (4) in eine Stellung verschiebbar sind, in der sie die auseinandergehaltenen Kontaktenden (11) der Kontaktbrücken (6) freigeben, so daß diese an den Kontaktelementen (4) in einen form- und kraftschlüssigen Kontakteingriff gelangen.

2. Trennkontaktanordnung nach Anspruch 1, **dadurch gekennzeichnet**, daß die Trennelemente (10) Teile einer zwischen dem festen Anlagenteil (3) und dem eingeschobenen Leistungsschalter (2) verschiebbaren Trennplatte (12) sind, die den Raum zwischen den Stromschienen (13) und dem Leistungsschalter (2) vollständig abdeckt.

3. Trennkontaktanordnung nach Anspruch 1 und 2, **dadurch gekennzeichnet,** daß die Trennplatte (12) am festen Anlagenteil (3) verschiebbar gelagert ist, und daß die Kontaktelemente (4) des Leistungsschalters (2) in die ihnen zugewandten offenen Enden (14) der Trennelemente (10) einführbar sind.

4. Trennkontaktanordnung nach Anspruch 3, **dadurch gekennzeichnet,** daß die offenen Enden (14) der Trennelemente (10) für den Einschub der Kontaktelemente (4) gegen den Leistungsschalter (2) über die Ebene der Trennplatte (12) als Anschlage für die Trennplatte (12) an dem Leistungsschalter (2) in der EIN-Stellung vorstehen.

5. Trennkontaktanordnung nach einem der Ansprüche 1 bis 4, **dadurch gekennzeichnet,** daß die Trennelemente (10) Hülsenform haben, und daß für die Verstellung der Trennplatte (12) mit den daran angeordneten hülsenförmigen Trennelementen (10) eine Schraubgetriebeanordnung (15) vorgesehen ist, die aus mehreren vom festen Anlagenteil (3) parallel zueinander hervorstehenden Gewindebolzen (16) und auf deren Gewindegängen jeweils gleichsinnig drehbaren, synchron angetriebenen Zahnrädern (17) besteht, die an der Trennplatte (12) drehbar gelagert und mit dieser in axialer Richtung verstellbar sind.

6. Trennkontaktanordnung nach Anspruch 5, **dadurch gekennzeichnet,** daß die zahnräder (17) über einen zentralen Zahnkranz (19) oder einen Zahnriementrieb (22) mit einer gemeinsamen Antriebseinrichtung zur axialen Verstellung der Trennplatte (12) zwischen dem festen Anlagenteil (3) und dem Leistungsschalter (2) verbunden sind.

7. Trennkontaktanordnung nach einem der Ansprüche 1 bis 6, **dadurch gekennzeichnet,** daß zwischen dem Leistungsschalter (2) und dem festen Anlagenteil (3) mechanische Verriegelungselemente (47, 59) vorhanden sind, die den Leistungsschalter (2) in der Einschubstellung am festen Anlagenteil (3) sichern und beim Abbau des Leistungsschalters (2) nach Verlagerung der Trennplatte (12) in die Trennstellung der Kontaktbrücken (6) aus seiner Verriegelungsstellung wieder freigeben.

8. Trennkontaktanordnung nach einem der Ansprüche 1 bis 7, **dadurch gekennzeichnet,** daß die Gewindebolzen (16) mit ihrem freien Ende (48) in Zentrieröffnungen (49) mit federnden Verrastungen (50) an der Rückseite des Leistungsschalters (2) oder an dessen Tragplatte (32) eingreifen.

9. Trennkontaktanordnung nach Anspruch 8, **dadurch gekennzeichnet,** daß die Gewindebolzen (16) an ihrem freien Ende (48) eine seitliche Quernut (51) für den Eingriff einer federnden Rastzunge an jeder Zentrieröffnung (49) aufweisen.

10. Trennkontaktanordnung nach einem der Ansprüche 1 bis 9, **dadurch gekennzeichnet,** daß die Trennplatte (12) in jeder ihrer Stellungen, nämlich in der AUS-Stellung, in der TEST-Stellung und in der EIN-Stellung des Leistungsschalters (2), durch einen Sperrhebel (26) verriegelbar ist, der in jeder dieser Stellungen in eine Innenverzahnung (28) an dem zentralen Zahnkranz (19) für den synchronen Antrieb der Zahnräder (17) zur Verstellung der Trennplatte (12) sperrend eingreift.

11. Trennkontaktanordnung nach Anspruch 10, **dadurch gekennzeichnet**, daß der Sperrhebel (26) am festen Anlagenteil (3) um eine zur Ebene der Trennplatte (12) parallele Achse (29) schwenkbar gelagert ist und mit seinem freien Ende (30) durch eine schlitzförmige Öffnung (31) in der Trennplatte (12) gegen die Rückseite des Leistungsschalters (2) hervorsteht.

12. Trennkontaktanordnung nach Anspruch 10 und 11, **dadurch gekennzeichnet**, daß die schlitzförmige Öffnung (31) an der Trennplatte (12) einen Quersteg (33) aufweist, und daß an dem Sperrhebel (26) eine fensterartige Längsöffnung (34) mit vorzugsweise drei davon parallel zur Ebene der Trennplatte (12) zur Seite gerichteten Rastschlitzen (35, 36, 37) vorgesehen ist, die in Längsrichtung des Sperrhebels (26) in einem solchen gegenseitigen Abstand nebeneinander angeordnet sind, daß der Sperrhebel (26) den Quersteg (33) an der Trennplatte (12) jeweils in den Stellungen AUS, TEST und EIN mit einem der parallelen Rastschlitze (35, 36, 37) sperrend übergreift.

13. Trennkontaktanordnung nach den Ansprüchen 10 bis 12, **dadurch gekennzeichnet**, daß der Sperrhebel (26) einen Raststeg (27) aufweist, mit dem er in jeder seiner Sperrstellungen in die Innenverzahnung (28) an dem zentralen Zahnkranz (19) sperrend eingreift.

14. Trennkontaktanordnung nach den Ansprüchen 10 bis 13, **dadurch gekennzeichnet,** daß der Sperrhebel (26) eine stirnseitige Entriegelungsnase (38) für einen Entklinkungsstift (39) an der Rückseite des Leistungsschalters (2) aufweist, mit der er den Entklinkungsstift (39) in den Raststellungen der Trennplatte (12) betätigt.

15. Trennkontaktanordnung nach den Ansprüchen 10 bis 14, **dadurch gekennzeichnet,** daß der Sperrhebel (26) über ein Gestänge (41) mit einem dazu parallelen Betätigungshebel (42) verbunden ist, der an der Trennplatte (12) schwenkbar gelagert ist und durch einen Schlitz (44) an der Tragplatte (32) neben dem Leistungsschalter (2) nach vorne hervorsteht.

16. Trennkontaktanordnung nach den Ansprüchen 10 bis 15, **dadurch gekennzeichnet,** daß der Betätigungshebel (42) ein Langloch (45) neben einem von der Tragplatte (12) hervorstehenden Einhängeauge für ein Sperrglied (4, 6), wie ein Einhängeschloß oder dergleichen, aufweist.

17. Trennkontaktanordnung nach Anspruch 3, **dadurch gekennzeichnet,** daß die Trennplatte (12) mit seitlichen Zapfen (52) in Langlöchern (53) an mindestens zwei parallelen Trennhebeln (54) sitzt, die an ihrem einen Ende an einer Seite eines ortsfesten Gehäuses (55) der Trennkontaktanordnung (1) schwenkbar gelagert und an ihrem anderen Ende durch eine Stellspindel anordnung (57) oder dergleichen derart verlagerbar sind, daß die Trennplatte (12) mit den Trennelementen (10) jeweils zwischen einer Trennstellung und einer Kontaktstellung auf den Kontaktelementen (4) des Leistungsschalters (2) hin- und herverlagerbar ist.

18. Trennkontaktanordnung nach Anspruch 17, **dadurch gekennzeichnet,** daß die Langlöcher (53) an den Trennhebeln (54) etwa mittig angeordnet sind.

19. Trennkontaktanordnung nach Anspruch 17 oder 18, **dadurch gekennzeichnet,** daß die Verriegelungselemente (59) für den Leistungsschalter (2) am festen Anlagenteil (3) nach Art von Verriegelungshaken (60) ausgebildet sind, die am festen Anlagenteil (3) oder am Leistungsschalter (2) schwenkbar gelagert sind und in der Verriegelungsstellung mit ihrem hakenförmigen Ende (61) in entsprechende Hakenwiderlager (62) an der Rückseite des Leistungsschalters (2) oder am festen Anlagenteil (3) eingreifen, und daß an der Trennplatte (12) Auflaufflächen (63) oder -schrägen vorhanden sind für die Verriegelungshaken (60), die die Verriegelungshaken (60) in der Trennstellung der Trennplatte (12), in der die Kontaktbrücken (6) von den Kontaktelementen (4) des Leistungsschalters (2) abgehoben sind, aus ihrer Verriegelungsstellung an dem Leistungsschalter (2) oder am festen Anlagenteil (3) ausheben.

20. Trennkontaktanordnung nach Anspruch 1, **dadurch gekennzeichnet,** daß die Kontaktbrücken (6) als Tulpenkontakte mit mehreren an den Kontaktelementen (5) am festen Anlagenteil (3) in einer Ringnut (8) unter der Spannung einer Ringfeder (9) anliegenden Kontaktstücken (7) ausgebildet sind.

21. Trennkontaktanordnung nach Anspruch 1, **dadurch gekennzeichnet,** daß die hülsenförmigen Trennelemente (10) an ihrem den Kontaktbrücken (6) zugewandten Ende angefast oder konisch abgeschrägt sind.

## Claims

1. Disconnecting contact arrangement for power circuit breakers which can be plugged in and drawn out in switching installations, while the power circuit breaker and the bus bars located in the fixed installation part present contact elements and contact bridges, connecting the latter, which engage under spring action and both in a positive and non-positive way at the contact elements **wherein** the contact bridges (6) are retained by positive locking with one end at the contact elements (5, 4) of the fixed installation part (3) or of the power circuit breaker (2) and with their other contact end (11) resting upon disconnecting elements (10) made of insulating synthetic material in the disconnected position of the disconnecting contact arrangement (1), into which the contact elements (4) located opposite are inserted in the inserted position of the power circuit breaker (2) over such a distance that they are situated in the area of the contact ends (11) belonging to the contact bridges (6) and held apart by means of the disconnecting elements (10) and that the disconnecting elements (10) are displaceable on the contact elements (4) after the insertion of the power circuit breaker (2) and can be displaced into a position in which they release the contact ends (11), belonging to the contact bridges (6) and held apart, in such a way that they enter into a positive and non-positive contact engagement at the contact elements (4).

2. Disconnecting contact arrangement as claimed in claim 1, **wherein** the disconnecting elements (10) are parts of a separating plate (12) which is displaceable between the fixed installation part (3) and the inserted power circuit breaker (2) and which completely covers the space between the bus bars (13) and the power circuit breaker (2).

3. Disconnecting contact arrangement as claimed in claims 1 and 2, **wherein** the separating plate (12) is displaceable at the fixed installation part (3) and wherein the contact elements (4) of the power circuit breaker (2) can be inserted into the open ends (14) located at the disconnecting elements (10) and turned towards these contact elements (4)

4. Disconnecting contact arrangement as claimed in claim 3, **wherein** the open ends (14) of the disconnecting elements (10) for the insertion of the contact elements (4) against the power circuit breaker (2) project beyond the plane of the separating plate (12) and form stops for the separating plate (12) at the power circuit breaker (2) in the ON position.

5. Disconnecting contact arrangement as claimed in any claim 1 through 4, **wherein** the separating elements (10) have the form of barrels and wherein an helical gearing (15) is provided for the displacement of the separating plate (12) and of the barrel-shaped disconnecting elements (10) arranged on the latter and consists of several threaded bolts (16), projecting in parallel with regard to one another from the fixed installation part (3), and of gears (17) which are arranged on the threads of these bolts, run each in the same direction, are driven in a synchronous way, pivoted on the separating plate (12) and can be displaced on the threaded bolts (16) in an axial direction and together with this plate.

6. Disconnecting contact arrangement as claimed in claim 5, **wherein** the gears (17) are connected with a common drive system allowing the axial displacement of the separating plate (12) between the fixed installation part (3) and the power circuit breaker (2) via a central gear rim (19) or a synchronous belt drive (22)

7. Disconnecting contact arrangement as claimed in any claim 1 through 6, **wherein** mechanical locking elements (47, 59) are located between the power circuit breaker (2) and the fixed installation part (3), secure the power circuit breaker (2) in the inserted position at the fixed installation part (3) and release it again from its inserted position during the removal of the power circuit breaker (2) after the displacement of the separating plate (12) into the disconnected position of the contact bridges (6).

8. Disconnecting contact arrangement as claimed in any claim 1 through 7, **wherein** the threaded bolts (16) engage with their free end (48) entering in centring openings (49) with spring mounted catches (50) at the rear side of the power circuit breaker (2) or at the supporting plate (32) of the latter.

9. Disconnecting contact arrangement as claimed in claim 8, **wherein** the threaded bolts (16) present a lateral cross groove (51) located at their free end (48) and allowing the engagement of a resilient snap-in pin in every centring opening (49).

10. Disconnecting contact arrangement as claimed in any claim 1 through 9, **wherein** the separating plate (12) is lockable by means of a blocking lever (26) in every of its positions, i.e. in the OFF position, in the TEST position, and in the ON position of the power circuit breaker (2), with this blocking lever (26) engaging in a blocking way in an internal toothing (28) at the central gear rim (19) for the synchronous drive of the gears (17) allowing the displacement of the separating plate (12) in every of these positions

11. Disconnecting contact arrangement as claimed in claim 10, **wherein** the blocking lever (26) is pivoted at the fixed installation part (3) around an axis (29), running in parallel with regard to the plane of the separating plate (12), and wherein its free end (30) projects across a slot-shaped opening (31) in the separating plate (12) towards the rear side of the power circuit breaker (2).

12. Disconnecting contact arrangement as claimed in claim 10 and 11, **wherein** the slot-shaped opening (31) presents a transverse web (33) at the separating plate (12) and wherein the blocking lever (26) provides a longitudinal opening (34), being shaped like a window and having a number of preferably three snap-in slots (35, 36, 37) which are directed in transverse direction with regard to the opening and in parallel with regard to the plane of the separating plate (12), and which are arranged side by side in the longitudinal direction of blocking lever (26) at such a distance with regard to one another that the blocking lever (26) extends over and blocks the transverse web (33) at the separating plate (12) by means of one of the parallel snap-in slots (35, 36, 37) in every OFF, TEST, and ON position.

13. Disconnecting contact arrangement as claimed in claims 10 through 12, **wherein** the blocking lever (26) presents a snap-in web (27) which allows it to engage in a blocking way in the internal toothing (28) at the central gear rim (19) in every of its blocking positions.

14. Disconnecting contact arrangement as claimed in claims 10 through 13, **wherein** the blocking lever (26) has a release nose (38) situated at the front side, cooperating with a release pin (39) which is located at the rear side of the power circuit breaker (2) and which is used by it in order to operate the release pin (39) in the locking positions of separating plate (12).

15. Disconnecting contact arrangement as claimed in claims 10 through 14, **wherein** the blocking lever (26) cooperates with a rod assembly (41) which links it with an operating lever (42) which is in parallel with it, pivots on separating plate (12) and projects towards the front across a slot (44) arranged in the supporting plate (32) by the side of power circuit breaker (2).

16. Disconnecting contact arrangement as claimed in claims 10 through 16, **wherein** the operating lever (42) presents a slot (45) which is located by the side of an eyelet which projects from the supporting plate (12) and allows the attachment of such a locking element (4, 6) as a padlock or a similar device.

17. Disconnecting contact arrangement as claimed in claim 3, **wherein** the separating plate (12) is supported by means of lateral pins (52) in slots (53) in a minimum of two parallel separating levers (54) which are supported in a slewable way and by one of their ends at the side of a fixed casing (55) of the disconnecting contact arrangement (1) while they can be displaced by means of a control spindle arrangement (57) or a similar device at their other end and in such a way that the separating plate (12) can be shifted back and forth together with the disconnecting elements (10) between a disconnected position and a contact position on the contact elements (4) of the power circuit breaker (2).

18. Disconnecting contact arrangement as claimed in claim 17, **wherein** the slots (53) are arranged approximately at a centrical position on the separating levers (54).

19. Disconnecting contact arrangement as claimed in claim 17 or 18, **wherein** the locking elements (59) for the power circuit breaker (2) at the fixed installation part (3) are designed in the way of latching hooks (60) which are pivoted at the fixed installation part (3) or at the power circuit breaker (2) and which engage in corresponding hook supports (62) at the rear side of the power circuit breaker (2) or at the fixed installation part (3) and by means of their hook-shaped end (61) in the locked position, and wherein the separating plate (12) presents guiding surfaces (63) or inclined parts which are provided for the latching hooks (60) and which lift the latching hooks (60) out of their locked position at the power circuit breaker (2) or at the fixed installation part (3) in the disconnected position of separating plate (12) in which the contact bridges (6) are lifted off from the contact elements (4) of power circuit breaker (2).

20. Disconnecting contact arrangement as claimed in claim 1, **wherein** the contact bridges (6) are designed as bell-shaped contacts, including several contact parts (7) which are applied under the tensioning action of an annular spring (9) against a ring groove (8) at the contact elements (5) of the fixed installation part (3).

21. Disconnecting contact arrangement as claimed in claim 1, **wherein** the barrel-shaped disconnecting elements (10) are bevelled or chamfered in a conical way at their end turned towards the contact bridges (6).

## Revendications

1. Dispositif séparateur de contacts pour disjoncteur pour coupure en charge embrochable et débrochable dans des installations de distribution électrique, où des éléments de contact, ainsi que des ponts de contact permettant leur raccord, sont disposés sur le disjoncteur pour coupure en charge et sur les barres conductrices dans la partie fixe de l'installation, lesdits ponts de contact saisissant les éléments de contact par engagement positif et par adhérence dus à la pression d'un ressort, - **caractérisé en ce que** les ponts de contact (6) sont maintenus par engagement positif à une extrémité sur les éléments de contact (5,4) de la partie fixe d'installation (3) ou du disjoncteur pour coupure en charge (2), et sont, en position de séparation du dispositif séparateur de contacts (1), maintenus par leur autre extrémité de contact (11) adhérents à des éléments de séparation (10) en matière synthétique isolante, dans lesquels, en position d'insertion du disjoncteur pour coupure en charge (2), les éléments de contact disposés en face (4) sont embrochés sur telle longueur, qu'ils se trouvent dans la zone des extrémités de contact (11) des ponts de contact (6), maintenues écartées par les éléments de séparation (10), et que les éléments de séparation (10), après insertion du disjoncteur pour coupure en charge (2) sur les éléments de contact (4), sont décalés sur une position où ils libèrent les extrémités écartées de contact (11) des ponts de contact (6), de telle sorte que celles-ci parviennent à une saisie de contact par engagement positif et par adhérence sur les éléments de contact (4).

2. Dispositif séparateur de contacts selon la revendication 1, **caractérisé en ce que** les éléments de séparation (10) font partie d'une plaque de séparation (10) ajustable entre la partie fixe de l'installation (3) et le disjoncteur pour coupure en charge (2) inséré, ladite plaque de séparation couvrant en totalité l'espace entre les barres conductrices (13) et le disjoncteur pour coupure en charge (2).

3. Dispositif séparateur de contacts selon revendication 1 et 2, **caractérisé en ce que** la plaque de séparation (12) est logée de manière à pouvoir coulisser contre la partie fixe de l'installation (3), et que les éléments de contact (4) du disjoncteur pour coupure en charge (2) sont introductibles dans les extrémités ouvertes (14) des éléments de séparation (10) dirigées vers eux.

4. Dispositif séparateur de contacts selon la revendication 3, **caractérisé en ce que** les extrémités ouvertes (14) des éléments de séparation (10) destinées à l'insertion des éléments de contact (4) contre le disjoncteur pour coupure en charge (2) font saillie au-delà du plan formé par la plaque de séparation (12), comme surfaces d'arrêt de la plaque de séparation (12) sur le disjoncteur pour coupure en charge (2) en position ON.

5. Dispositif séparateur de contacts selon l'une des revendications 1 à 4, **caractérisé en ce que** les éléments de séparation (10) sont en forme de douille, et qu'un dispositif à mouvement à vis (15) est prévu pour l'ajustage de la plaque de séparation (12) avec les éléments de séparation (10) en forme de douille disposés contre, ledit dispositif à mouvement à vis consistant en plusieurs boulons filetés (16) parallèles l'un à l'autre et saillant hors de la partie fixe d'installation (3), et en roues dentées (17) disposées sur le pas des boulons respectifs et toumant dans le même sens par entraînement synchrone, lesdites roues dentées étant logées afin de pouvoir toumer sur la plaque de séparation (12) et étant ajustables avec celle-ci en direction axiale.

6. Dispositif séparateur de contacts selon la revendication 5, **caractérisé en ce que** les roues dentées (17) sont reliées par une couronne dentée centrale (19) ou une transmission à courroie dentée (22), à un dispositif commun d'entraînement pour l'ajustage axial de la plaque de séparation (12) entre la partie fixe d'installation (3) et le disjoncteur pour coupure en charge (2).

7. Dispositif séparateur de contacts selon l'une des revendications 1 à 6, **caractérisé en ce que** des éléments de verrouillage mécaniques (47, 59) sont disposés entre le disjoncteur pour coupure en charge (2) et la partie fixe de l'installation (3), lesdits éléments de verrouillage bloquant le disjoncteur pour coupure en charge (2) en position d'insertion contre la partie fixe (3), et le libèrent à nouveau de sa position de verrouillage par séparation du disjoncteur pour coupure en charge (2), après déplacement de la plaque de séparation (12) sur la position de séparation des ponts de contact (6).

8. Dispositif séparateur de contacts selon l'une des revendications 1 à 7, **caractérisé en ce que** les boulons filetés (16) ont prise sur le côté arrière du disjoncteur pour coupure en charge (2) ou sur la plaque d'appui (32) de celui-ci, par leur extrémité libre (48) s'insérant dans des ouvertures centrées (49) à enclenchements montés sur ressorts (50).

9. Dispositif séparateur de contacts selon la revendication 8, **caractérisé en ce que** les boulons filetés (16) présentent à leur extrémité libre (48) une rainure latérale (51) pour la saisie par un cran d'arrêt monté sur ressort, disposé sur chaque ouverture centrée (49).

10. Dispositif séparateur de contacts selon l'une des revendications 1 à 9, **caractcaractérisé en**la plaque de séparation (12) est verrouillable par un levier d'arrêt (26) dans chacune de ses positions, à savoir en position OFF, en position TEST et en position ON du disjoncteur pour coupure en charge (2), ledit levier d'arrêt ayant dans chacune de ces positions prise d'arrêt sur une denture intérieure (28) sur la couronne dentée centrale (19), pour l'entraînement synchrone des roues dentées (17) jusqu'à ajustage de la plaque de séparation (12).

11. Dispositif séparateur de contacts selon la revendication 10, **caractérisé en ce que** le levier d'arrêt (26) est monté de manière pivotante sur la partie fixe de l'installation (3), sur un axe (29) parallèle au plan de la plaque de séparation (12), et que par son extrémité libre (30) il fait saillie, traversant une ouverture en forme de fente (31) ménagée dans la plaque de séparation (12), contre le côté arrière du disjoncteur pour coupure en charge (2).

12. Dispositif séparateur de contacts selon revendication 10 et 11, **caractérisé en ce que** l'ouverture en forme de fente (31) dans la plaque de séparation (12) présente une barrette transversale (33), et qu'est prévue sur le levier d'arrêt (26) une ouverture longitudinale en forme de fenêtre (34), disposant préférentiellement de trois fentes d'arrêt (35,36,37) parallèles au plan de la plaque de séparation (12) et ménagées sur un côté de l'ouverture, lesdites fentes d'arrêt étant disposées l'une à côté de l'autre dans le sens de la longueur du levier d'arrêt (26) et avec un tel écartement réciproque, que le levier d'arrêt (26) a une saisie d'arrêt par l'une des fentes d'arrêt parallèles (35,36,37) sur la barrette transversale (33) de la plaque de séparation (12), fente correspondant à l'une des positions OFF, TEST et ON.

13. Dispositif séparateur de contacts selon les revendications 10 à 12, **caractérisé en ce que** le levier d'arrêt (26) présente une traverse d'arrêt (27), par laquelle il a saisie d'arrêt sur la denture intérieure (28) de la couronne dentée centrale (19), dans chacune de ses positions d'arrêt.

14. Dispositif séparateur de contacts selon les revendications 10 à 13, **caractérisé en ce que** le levier d'arrêt (26) présente de face un talon de déverrouillage (38) pour une goupille de décliquetage (39) sur le côté arrière du disjoncteur pour coupure en charge (2), talon avec lequel il actionne la goupille de décliquetage (39) dans les positions de crantage de la plaque de séparation (12).

15. Dispositif séparateur de contacts selon les revendications 10 à 14, **caractérisé en ce que** le levier d'arrêt (26) est relié par une tige (41) à un levier d'actionnement (42) qui lui est parallèle, ledit levier d'actionnement étant monté de manière pivotante sur la plaque de séparation (12), et faisant saillie vers l'avant traversant une fente (44) ménagée dans la plaque d'appui (32) à côté du disjoncteur pour coupure en charge (2).

16. Dispositif séparateur de contacts selon les revendications 10 à 15, **caractérisé en ce que** le levier d'actionnement (42) présente une ouverture longitudinale (45) prolongeant un oeillet d'accrochage pour élément de blocage (46) saillant de la plaque d'appui (32), tel que cadenas accrochable ou similaire.

17. Dispositif séparateur de contacts selon la revendication 3, **caractérisé en ce que** la plaque de séparation (12) est positionnée sur deux leviers de séparation (54) parallèles au moins, par des tenons latéraux (52) dans les ouvertures longitudinales (53), lesdits leviers de séparation étant montés de manière pivotante à l'une de leurs extrémités sur un côté d'un boîtier fixe (55) du dispositif séparateur de contacts (1), étant montés à leur autre extrémité de manière déplaçable par un dispositif à broche de réglage (57) ou similaire, de telle sorte que la plaque de séparation (12) et les éléments de séparation (10) peuvent être déplacés en mouvement alternatif sur les éléments de contact (4) du disjoncteur pour coupure en charge (2), respectivement entre une position de séparation et une position de contact.

18. Dispositif séparateur de contacts selon la revendication 17, **caractérisé en ce que** les ouvertures longitudinales (53) sur les leviers de séparation (54) sont disposées à peu près en leur centre.

19. Dispositif séparateur de contacts selon revendication 17 ou 18, **caractérisé en ce que** les éléments de verrouillage (59) pour le disjoncteur pour coupure en charge (2) sur la partie fixe de l'installation (3) sont conçus comme sortes de crochets de verrouillage (60), lesquels sont montés de manière pivotante sur la partie fixe de l'installation (3) ou sur le disjoncteur pour coupure en charge (2) et, en position de verrouillage, font saisie par leur extrémité en forme de crochet (61) sur des butées pour crochets (62) correspondantes sur le côté amère du disjoncteur pour coupure en charge (2) ou sur la partie fixe de l'installation (3), et en ce que des surfaces (63) ou des plans inclinés de contact sont disposés sur la plaque de séparation (12) afin de recevoir les crochets de verrouillage (60), lesdites surfaces ou plans inclinés de contact relevant les crochets de verrouillage (60) de leur position de verrouillage sur le disjoncteur pour coupure en charge (2) ou sur la partie fixe d'installation (3), en position de séparation de la plaque de séparation (12), position où les ponts de contact (6) sont décollés des éléments de contact (4) du disjoncteur pour coupure en charge (2).

20. Dispositif séparateur de contacts selon la revendication 1, **caractérisé en ce que** les ponts de contact (6) sont conçus comme contacts en U avec plusieurs pièces de contact (7) adhérentes par une rainure annulaire (8) sous pression d'un ressort annulaire (9) aux éléments de contact (5) sur la partie fixe de l'installation (3).

21. Dispositif séparateur de contacts selon la revendication 1, **caractérisé en ce que** les éléments de séparation (10) en forme de douilles sont chanfreinés ou coniquement biseautés à leur extrémité dirigée vers les ponts de contact (6).
